# EUROPÄISCHE PATENTANMELDUNG

(11) **EP 2 632 017 A1**
(43) Veröffentlichungstag der Anmeldung: **28.08.2013**
(21) Anmeldenummer: 12156846.3
(22) Anmeldetag: 24.02.2012
(51) Int. Cl.: H02J 7/00, B60L 11/18

(54) **Batteriesteuerungsvorrichtung**

(71) Anmelder: Magna E-Car Systems GmbH & Co OG, 8041 Graz (AT)
(72) Erfinder: Trsek, Martin, 8010 Graz (AT); Lettner, Markus, 8521 Wettmannstätten (AT); Klobasa, Roland, 8020 Graz (AT); Hausberger, Ingo, 8020 Graz (AT)
(74) Vertreter: Rausch, Gabriele

(57) **Zusammenfassung**

Batteriesteuerungsvorrichtung mit einer ersten Elektronikeinheit (1) und einer zweiten Elektronikeinheit (2) die zum Austausch von Informationen über eine Kommunikationsverbindung in Verbindung stehen, wobei
der Austausch von Informationen über die Kommunikationsverbindung über einen SPI (Serial Peripheral Interface)-Bus erfolgt, und
die Kommunikationsverbindung eine Kommunikationsleitung (3) umfasst, wobei die Kommunikationsleitung (3) zumindest abschnittsweise elektromagnetisch geschirmt ausgeführt ist, und
die Kommunikationsverbindung eine galvanische Trennung (5) aufweist.

## Beschreibung

Die vorliegende Erfindung betrifft eine Batteriesteuerungsvorrichtung mit einer ersten Elektronikeinheit und einer zweiten Elektronikeinheit die zum Austausch von Informationen über eine Kommunikationsverbindung in Verbindung stehen.

Derartige Vorrichtungen werden beispielsweise für Elektro- und Hybridfahrzuge genutzt, um Batteriesysteme die üblicherweise eine Vielzahl von Batteriezellen umfassen überwachen und steuern zu können. Hierzu kann eine zentrale erste Elektronikeinheit als BMU (Battery Management Unit) ausgeführt sein, die insbesondere den Gesamtzustand des Batteriesystems überwacht und beispielsweise einen Ladungsausgleich zwischen den Batteriezellen steuert. Zusätzlich werden häufig als zweite Elektronikeinheiten lokale CSC (Cell Supervisory Controler) eingesetzt, die beispielsweise für jede einzelne Batteriezelle Zustände wie Zellspannung und Temperatur erfassen und an die BMU kommunizieren. Die Kommunikationsverbindung zwischen BMU und CSC ist üblicherweise als CAN (Controler Area Network)-Bus Verbindung ausgeführt, da dieser Verbindungstyp auch für längere Kommunikationswege eine zuverlässige Kommunikation gewährleistet. Jedoch sind für die Verwendung eines CAN-Busses sowohl auf Seite der BMU als auch auf Seite des CSC komplexe Sende-/ Empfangsvorrichtungen zur Umsetzung des Protokolls erforderlich.

Als Kommunikationsverbindung zwischen Elektronikeinheiten ist weiterhin der SPI (Serial Peripheral Interface)-Bus bekannt, der mit weniger Aufwand zu implementieren ist, sich jedoch zur Verbindung von räumlich weiter entfernt liegenden Elektronikeinheiten kaum eignet, da eine SPI-Bus-Verbindung anfällig für Störsignale, wie insbesondere Gleichtaktstörungen ist.

Eine Batterieüberwachungs- und Steuerungsvorrichtung ist aus der DE 10 2010 016 175 A1 bekannt, wobei zwischen einem Systemcontroller und einem Batterieüberwachungsmodul ein primäres und ein sekundäres Verbindungsglied vorgesehen sind. Das primäre Verbindungsglied kann durch ein SPI-Verbindungsglied gebildet sein. Bei einem Ausfall oder Reduktion der seriellen Verbindung übernimmt das sekundäre Verbindungsglied, das als UART(Universal Asynchronous Receiver/Transmitter)-Verbindungsglied ausgebildet ist, die Kommunikationsaufgabe.

Es ist eine Aufgabe der Erfindung, Batteriesteuerungsvorrichtungen der genannten Art zu verbessern und insbesondere eine zuverlässige und kostengünstige Verbindung zwischen einer ersten Elektronikeinheit und einer zweiten Elektronikeinheit auch bei längeren Kommunikationswegen zu ermöglichen.

Die Lösung der Aufgabe erfolgt durch eine Batteriesteuerungsvorrichtung mit einer ersten Elektronikeinheit und einer zweiten Elektronikeinheit die zum Austausch von Informationen über eine Kommunikationsverbindung in Verbindung stehen, wobei,
der Austausch von Informationen über die Kommunikationsverbindung über einen SPI (Serial Peripheral Interface)-Bus erfolgt, und
die Kommunikationsverbindung eine Kommunikationsleitung umfasst, wobei die Kommunikationsleitung zumindest abschnittsweise elektromagnetisch geschirmt ausgeführt ist, und
die Kommunikationsverbindung eine galvanische Trennung aufweist.

Erfindungsgemäß ist zwischen der ersten Elektronikeinheit und der zweiten Elektronikeinheit eine Kommunikationsleitung vorgesehen, die elektromagnetisch abgeschirmt ausgeführt ist, und zusätzlich eine galvanische Trennung zwischen den Elektronikeinheiten. Durch das Zusammenwirken dieser Maßnahmen ist es möglich auch über längere Verbindungswege eine ungestörte Kommunikation zwischen den Elektronikeinheiten über eine SPI-Bus Verbindung zu gewährleisten. Der Einfluss von elektromagnetischen Störungen wird durch den erfindungsgemäßen Aufbau deutlich verringert. Gleichtaktstörungen auf dem Signal der Kommunikationsleitung wirken sich durch die galvanische Trennung nicht auf die Verarbeitung des Signals in der Elektronikeinheit aus.

Weiterbildungen der Erfindung sind in den abhängigen Ansprüchen, der Beschreibung sowie den beigefügten Zeichnungen angegeben.

Bevorzugt weist die Kommunikationsleitung eine Länge von mehr als 10 cm, insbesondere mehr als 20 cm, insbesondere mehr als 50 cm auf. Dadurch ist eine räumlich getrennte Anordnung der ersten von der zweiten Elektronikeinheit möglich, eine sichere Kommunikationsverbindung zwischen den Elektronikeinheiten jedoch auch über größere Distanzen gewährleistet.

In einer bevorzugten Ausführungsform sind die erste und die zweite Elektronikeinheit von einem ersten und zweiten Steuergerät gebildet.

Besonders bevorzugt ist die erste Elektronikeinheit eine BMU (Battery Management Unit). Die BMU ist als übergeordnetes Kontroll- und Steuersystem für die Überwachung und Steuerung der Batteriezellen in ihrer Gesamtheit, also des gesamten Batteriesystems eingerichtet.

Bevorzugt ist die zweite Elektronikeinheit ein CSC (Cell Supervisory Controler). Der CSC überwacht und/oder steuert eine Batterieeinheit, insbesondere eine einzelne Batteriezelle und kommuniziert bevorzugt mit einer übergeordneten BMU.

Besonders bevorzugt ist die galvanische Trennung zwischen der ersten Elektronikeinheit und der Kommunikationsleitung angeordnet. Dadurch können sich Störungen in der Kommunikationsleitung, wie beispielsweise Gleichtaktstörungen, nicht auf die erste Elektronikeinheit auswirken.

Besonders bevorzugt sind Filterelemente zwischen Kommunikationsleitung und erster Elektronikeinheit und/oder zwischen Kommunikationsleitung und zweiter Elektronikeinheit angeordnet. Durch die Filterelemente wird der Einfluss von hochfrequenten Störungen auf das Kommunikationssignal verringert.

Bevorzugt ist die galvanische Trennung durch einen Optokoppler oder durch induktive oder kapazitive Übertragung oder mittels hochsperrender Transistoren gebildet.

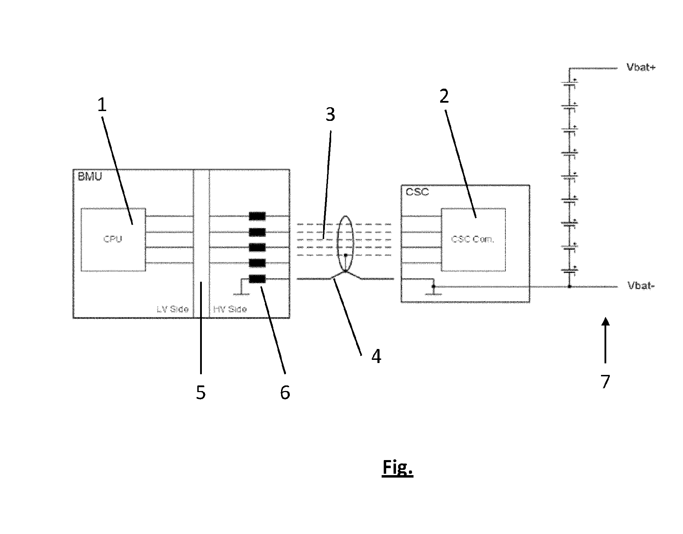

Die Erfindung wird im Folgenden beispielhaft unter Bezugnahme auf die Zeichnung beschrieben.
- Fig.: ist eine schematische Darstellung einer erfindungsgemäßen Batteriesteuerungsvorrichtung.

In der Fig. ist eine erfindungsgemäße Batteriesteuerungsvorrichtung dargestellt, mit einer ersten Elektronikeinheit 1 und einer zweiten Elektronikeinheit 2, die über eine Kommunikationsverbindung miteinander verbunden sind. Die zweite Elektronikeinheit 2 wird durch einen CSC (Cell Supervisory Controler) gebildet, der eine oder mehrere Batteriezellen eines Batteriesystems 7 überwacht und steuert. Die erste Elektronikeinheit 1 wird von einer BMU (Battery Management Unit) gebildet. Die Kommunikationsverbindung umfasst eine galvanische Trennung 5 der BMU von einer Kommunikationsleitung 3, wobei die galvanische Trennung 5 beispielsweise als Optokoppler ausgeführt ist. Zwischen galvanischer Trennung 5 und Kommunikationsleitung 3 sind Filterelemente 6 angeordnet. Die Kommunikationsleitung 3 ist durch eine Abschirmung 4 von elektromagnetischen Störungen geschützt.

Die Erfindung ermöglicht somit eine Batteriesteuerungsvorrichtung mit einer zuverlässigen und kostengünstigen Verbindung zwischen einer ersten Elektronikeinheit und einer zweiten Elektronikeinheit auch bei längeren Kommunikationswegen auszustatten.

### Bezugszeichenliste

- 1: erste Elektronikeinheit
- 2: zweite Elektronikeinheit
- 3: Kommunikationsleitung
- 4: Abschirmung
- 5: galvanische Trennung
- 6: Filterelemente
- 7: Batteriesystem

## Patentansprüche

1. Batteriesteuerungsvorrichtung mit einer ersten Elektronikeinheit (1) und einer zweiten Elektronikeinheit (2) die zum Austausch von Informationen über eine Kommunikationsverbindung in Verbindung stehen,
**dadurch gekennzeichnet,**
**dass** der Austausch von Informationen über die Kommunikationsverbindung über einen SPI (Serial Peripheral Interface)-Bus erfolgt, und
**dass** die Kommunikationsverbindung eine Kommunikationsleitung (3) umfasst, wobei die Kommunikationsleitung (3) zumindest abschnittsweise elektromagnetisch geschirmt ausgeführt ist, und
**dass** die Kommunikationsverbindung eine galvanische Trennung (5) aufweist.

2. Batteriesteuerungsvorrichtung nach Anspruch 1,
**dadurch gekennzeichnet, dass** die Kommunikationsleitung (3) eine Länge von mehr als 10 cm, insbesondere mehr als 20 cm, insbesondere mehr als 50 cm aufweist.

3. Batteriesteuerungsvorrichtung nach zumindest einem der vorstehenden Ansprüche,
**dadurch gekennzeichnet, dass** die erste und die zweite Elektronikeinheit (1, 2) von einem ersten und zweiten Steuergerät gebildet sind.

4. Batteriesteuerungsvorrichtung nach zumindest einem der vorstehenden Ansprüche,
**dadurch gekennzeichnet, dass** die erste Elektronikeinheit (1) eine BMU (Battery Management Unit) ist.

5. Batteriesteuerungsvorrichtung nach zumindest einem der vorstehenden Ansprüche,
**dadurch gekennzeichnet, dass** die zweite Elektronikeinheit (2) ein CSC (Cell Supervisory Controler) ist.

6. Batteriesteuerungsvorrichtung nach zumindest einem der vorstehenden Ansprüche,
**dadurch gekennzeichnet, dass** die galvanische Trennung (5) zwischen der ersten Elektronikeinheit (1) und der Kommunikationsleitung (3) angeordnet ist.

7. Batteriesteuerungsvorrichtung nach zumindest einem der vorstehenden Ansprüche,
**dadurch gekennzeichnet, dass** Filterelemente (6) zwischen Kommunikationsleitung (3) und erster Elektronikeinheit (1) und/oder zwischen Kommunikationsleitung (3) und zweiter Elektronikeinheit (2) angeordnet sind.

8. Batteriesteuerungsvorrichtung nach zumindest einem der vorstehenden Ansprüche,
**dadurch gekennzeichnet, dass** die galvanische Trennung (5) durch einen Optokoppler oder durch induktive oder kapazitive Übertragung oder mittels hochsperrender Transistoren gebildet ist.
